# EUROPÄISCHE PATENTSCHRIFT

(11) **EP 2 467 888 B1**
(45) Veröffentlichungstag und Bekanntmachung des Hinweises auf die Patenterteilung: **16.10.2013**
(21) Anmeldenummer: 10742756.9
(22) Anmeldetag: 04.08.2010
(51) Int. Cl.: H01M 2/10, H01M 2/26, H01M 10/02, H01M 8/02, B60K 6/00

(54) **KRAFTWAGEN MIT EINER ELEKTROCHEMISCHEN ZELLE**
MOTOR VEHICLE WITH AN ELECTROCHEMICAL CELL
VEHICULE AVEC UNE PILE ELECTROCHIMIQUE

(30) Priorität: 21.08.2009 DE 102009038422
(43) Veröffentlichungstag der Anmeldung: 27.06.2012
(73) Patentinhaber: Audi AG, 85045 Ingolstadt (DE)
(72) Erfinder: SCHÜSSLER, Martin, 85092 Kösching (DE); STAUBER, Alois, 85049 Ingolstadt (DE)
(74) Vertreter: Brandt, Kai
(86) Internationale Anmeldenummer: PCT/EP2010/004785
(87) Internationale Veröffentlichungsnummer: WO 2011/020562

(56) Entgegenhaltungen:
- JP-A- 6 333 543
- JP-A- 2006 040 716
- JP-A- 2006 127 882
- US-A1- 2004 089 487

## Beschreibung

Die Erfindung betrifft einen Kraftwagen mit einer elektrochemischen Zelle.

Aufgrund der hohen Packungsdichte von Komponenten moderner Kraftwagen gewinnt die optimale Ausnutzung des zur Verfügung stehenden Bauraums zunehmend an Bedeutung. Dies ist bei batteriebetriebenen Elektrofahrzeugen von besonderer Wichtigkeit, da solche Kraftwagen eine große Anzahl von Batterien für ihren Betrieb benötigen.

Aufgrund ihrer hohen Energiedichte werden zunehmend Lithiumionenakkumulatoren zur Stromversorgung von Kraftwagen eingesetzt. Solche Akkumulatoren sind meist in Form von sogenannten Stapelzellen mit einer Mehrzahl von plattenförmigen Elektroden ausgebildet.

Üblicherweise sind die Elektroden solcher Stapelzellen rechteckig geformt und in deckungsgleicher Anordnung übereinander gestapelt. Der Stapel besteht dabei aus einer abwechselnden Abfolge von Anoden und Kathoden, wobei alle Anoden und alle Kathoden mit einem jeweiligen gemeinsamen Abgriffspol der Zelle verbunden sind. Die Anschlüsse der einzelnen Elektroden sind dabei jeweils auf derselben Seite des Elektrodenstapels angeordnet.

Eine derartige Stapelzelle ist beispielsweise in der US 7 368 191 B2 beschrieben.

Aufgrund der rechteckigen Form der Elektroden besitzen bekannte Stapelzeiien insgesamt eine rechteckige Querschnittsfläche. Im Kraftwagen muss daher ein ebenfalls im Querschnitt rechteckiger Einbauraum für eine solche Stapelzelle zur Verfügung gestellt werden. Aufgrund dieser Anforderung ist die Zahl der möglichen Einbaupositionen für eine solche Batterie in einen Kraftwagen begrenzt. Meist steht lediglich in einem Motorraum des Kraftwagens hinreichender Bauraum zur Verfügung.

Aus der US 2004/0089487 A1 ist ferner eine Batterie zur Aufnahme in einer Reserveradmulde bekannt. Die Elektroden dieser Batterie weisen eine im Wesentlichen halbkreisförmige Kontur auf, um den vorhandenen Bauraum optimal auszunutzen.

Die JP 2006 127 882 A beschreibt eine Stapelzelle mit reduzierter Querschnittsfläche, bei welcher die einzelnen Elektroden eine trapezförmige Geometrie aufweisen.

Aus der JP 633 543 A ist eine weitere Stapelzelle mit dreieckig geformten Elektroden bekannt. Mehrere solche Stapelzellen werden gemeinsam in einem rechteckigen Gehäuse untergebracht, um so die Stabilität der Batterie zu erhöhen.

Die JP 2006 040 716 A beschreibt eine weitere Stapelzelle mit rechteckigen Elektroden, die von jeweiligen Elektrodenmembranen getrennt sind. Die Stapelzelle wird stirnseitig von jeweiligen Endplatten begrenzt, die mittels einer Schraubverbindung gegeneinander verspannt sind.

Der vorliegenden Erfindung liegt somit die Aufgabe zugrunde, einen Kraftwagen der eingangs genannten Art so weiterzuentwickeln, dass der zur Verfügung stehende Bauraum für Batterien besser genutzt wird.

Diese Aufgabe wird durch einen Kraftwagen mit den Merkmalen des Patentanspruchs 1 gelöst.

In einem solchen Kraftwagen ist eine elektrochemische Zelle außerhalb eines Motorraums des Kraftwagens in einem Aufnahmeraum angeordnet, welcher eine sich in Richtung der Fahrzeughochachse verjüngende Querschnittsfläche aufweist. Um den Aufnahmeraum möglichst vollständig auszunutzen, ist eine Querschnittsfläche der elektrochemischen Zelle an die Querschnittsfläche des Aufnahmeraums angepasst. Mit anderen Worten verjüngt sich auch die Querschnittsfläche der elektrochemischen Zelle in ihrer Einbaulage in Richtung der Fahrzeughochachse. Der im Kraftwagen zur Verfügung stehenden Bauraum wird somit besonders gut ausgenutzt. Ein Beispiel für einen solchen Aufnahmeraum ist ein Mitteltunnel des Kraftwagens. Gerade bei elektrischen angetriebenen Kraftwagen, welche keine Kardanwelle und keinen Abgasstrang aufweisen, kann der Mitteltunnel zur Aufnahme anderer Komponenten des Kraftwagens Verwendung finden. Aufgrund der Verjüngung der Querschnittsfläche der elektrochemischen Zelle ist diese besonders gut an den Querschnitt des Mitteltunnels angepasst, der sich in Fahrzeughochrichtung verjüngt. So kann nahezu der vollständige zur Verfügung stehenden Raum im Mitteltunnel zur Aufnahme von elektrochemischen Zellen genutzt werden. Bei elektrischen betriebenen Fahrzeugen mit einer Vielzahl von relativ schweren elektrochemischen Zellen wird durch die Unterbringung von elektrochemischen Zellen im Mitteltunnel zudem eine gute Gewichtsverteilung des Kraftwagens erreicht, was sich unmittelbar positiv auf dessen Fahreigenschaften auswirkt.

Die elektrochemische Zelle selbst weist einen Elektrodenstapel aus wenigstens zwei Elektroden in paralleler Anordnung auf. Es handelt sich also um eine Stapelzelle. Die Elektroden sind so ausgebildet, dass eine Querschnittsfläche der Elektroden mit zunehmenden Abstand von einem Anschluss abnimmt, über welchen die jeweilige Elektrode mit einem zugeordneten Abgriffspol der Zelle verbunden ist. Dies kann erreicht werden, indem sich die Elektrode vom Anschluss weg keilförmig verjüngt. Hierdurch werden besonders gute elektrochemische Eigenschaften der Batterie erhalten.

Aufgrund des inneren Widerstands der Elektrode treten nämlich pro Flächenelement der Elektrode umso mehr Ladungsträger in den Elektrolyten über, je näher das betrachtete Flächenelement am Anschluss der Elektrode angeordnet ist. Durch diese Inhomogenität des Stromflusses über die Elektrodenfläche hinweg kommt es zu einer inhomogenen thermischen Belastung der Zelle. Dies führt zu einer Rückkopplung, da sowohl der Widerstand der Elektrode selbst als auch der Durchtrittswiderstand von der Elektrode in den Elektrolyten mit steigender Temperatur sinkt. Dadurch erhöht sich die Stromflussdichte in Anschlussnähe noch zusätzlich, bis ein Gleichgewicht eingestellt ist. Durch die stark inhomogene Strom- und Temperaturverteilung kommt es oftmals zu einer vorzeitigen Alterung der elektrochemischen Zelle, was gerade bei Hochleistungsakkumulatoren im Automobilbereich zum vorzeitigen Austausch von Zellen oder Batteriesystemen führen kann und damit hohe Kosten beim Hersteller verursacht.

Da die beschriebene Elektrode im anschlussnahen Bereich mit besonders hoher Stromdichte eine besonders große Querschnittsfläche aufweist, ist der innere Widerstand der Elektrode dort besonders klein, wodurch nur geringe thermische Belastungen auftreten. Neben der sehr guten Ausnutzung des Einbauraums wird also gleichzeitig eine besonders gute Haltbarkeit der elektrochemischen Zelle erreicht.

Alternativ oder zusätzlich kann sich die Elektrode von einer anschlussseitigen Basiskante weg senkrecht zur Stapelrichtung der Elektroden verschmälern. Damit steht in unmittelbarer Nähe des Anschlusses - also im Bereich der höchsten Flächenstromdichte - eine entsprechend größere Durchtrittsfläche für Ladungsträger aus der Elektrode in den Elektrolyten bzw. umgekehrt zur Verfügung. Mit zunehmenden Abstand zum Anschluss nimmt diese Durchtrittsfläche ab, wobei sich aufgrund des ebenfalls abnehmenden Ladungsträgerdurchtritts eine im Wesentlichen homogene Flächenstromdichte über die gesamte Elektrode einstellt. Beschädigungen und Verschleißerscheinungen aufgrund von Inhomogenitäten der Flächenstromdichte und damit unterschiedlichen Temperaturen innerhalb der Zelle, wie sie bei aus dem Stand der Technik bekannten Stapelzellen mit rechteckigen Querschnitt auftreten, werden so vermieden.

In der Einbaulage der elektrochemischen Zelle im Kraftwagen verläuft in diesem Fall die Stapelrichtung der Elektroden senkrecht zur sich verjüngenden Querschnittsfläche des Einbauraums. Der Anschluss der Elektroden befindet sich auf der in Fahrzeughochrichtung unteren Seite der Elektroden. Die Anpassung der Querschnittsfläche der elektrochemischen Zelle an die Form des Einbauraums wird also durch die Form der Elektroden erzielt.

Bevorzugt ist die Elektrode spiegelsymmetrisch bezüglich einer Mittelsenkrechten auf die Basiskante ausgebildet. Ein Gradient bezüglich der zur Verfügung stehenden Durchtrittsfläche und des inneren Widerstandes tritt somit nur in Richtung vom Anschluss der Elektrode weg senkrecht zur Stapelrichtung auf. Durch die Formgebung der Elektrode werden also keine zusätzlichen Asymmetrien eingeführt, welche wiederum zu Inhomogenitäten in der Flächenstromdichte führen könnten.

In einer ersten Ausführungsvariante weist die Elektrode eine weitere zur Basiskante parallele Kante auf. Im einfachsten Fall kann eine derartige Elektrode trapezoid ausgebildet sein. Je nach der Gesamtform der Zelle, die gegebenenfalls weitere Einflüsse auf die Homogenität des Stromflusses haben kann, kann die Elektrode auch von der trapezoiden Rechteckform abweichen. In dieser Ausführungsform der Erfindung sind die Seitenkanten der Elektrode, welche die Basiskante und die weitere Kante verbinden, gekrümmt ausgeführt. Alternativ hierzu wird auch auf die der Basiskante gegenüberliegende Kante verzichtet, wobei die Endpunkte der Basiskante in dieser Ausführungsform über eine gekrümmte Kante in Form eines Kegelschnittes verbunden sind. Die Elektrode erhält somit im einfachsten Fall die Form eines Kreissegmentes oder eines Ellipsensegmentes, kann aber auch paraboloid oder dergleichen ausgebildet sein.

Auf der Seite der Basiskante jeder Elektrode ist weiterhin bevorzugterweise eine Anschlusszunge zum Verbinden der Elektrode mit dem zugeordneten Abgriffspol der elektrochemischen Zelle angeordnet. Da die Basiskante den breitesten Bereich der Elektrode darstellt, steht somit im Bereich des höchsten Ladungsträgerdurchtritts zwischen Elektrode und Elektrolyten die größte Elektrodenfläche zur Verfügung.

Um weitere Inhomogenitäten im Stromfluss und in der Wärmeentwicklung, die aus der Relativlage der Elektroden im Stapel zueinander resultieren können, zu vermeiden, sind die Elektroden bevorzugt deckungsgleich im Elektrodenstapel angeordnet. Damit befinden sich auch die Basiskanten und damit die Anschlusszungen der Elektroden auf derselben Seite des Elektrodenstapels, so dass die interne Verbindung der Elektroden des Elektrodenstapels mit den Abgriffspolen der elektrochemischen Zelle besonders einfach ist.

Im Folgenden soll die Erfindung und ihre Ausführungsformen anhand der Zeichnung näher erläutert werden. Hierbei zeigen:
- Fig. 1: eine teilweise angeschnittene Ansicht einer Stapelzelle nach dem Stand der Technik; und
- Fig. 2-5: unterschiedliche Ausführungsformen von Elektroden für eine elektrochemische Zelle eines erfindungsgemäßen Kraftwagens.

Eine im Ganzen mit 10 bezeichnete, aus dem Stand der Technik bekannte prismatische Stapelzelle umfasst einen Stapel von Elektroden 12, welche über Anschlusszungen 14, die der Übersichtlichkeit halber nicht alle bezeichnet sind, mit jeweils zugeordneten Abgriffspolen 16, 18 der Zelle 10 verbunden sind. Die Elektroden 12 sind in einem Zellengehäuse 20 angeordnet und werden von einem Elektrolyten umspült. Bei aus dem Stand der Technik bekannten Stapelzellen sind die Elektroden 12 rechteckig ausgeführt.

Da das Material der Elektroden 12 selbst einen nicht vernachlässigbaren Innenwiderstand aufweist, ist bei derartigen Zellen die Stromdichte zwischen Elektrode 12 und Elektrolyten abhängig vom Abstand eines betrachteten Flächenelementes von der Anschlusszunge 14. Je weiter das betrachtete Flächenelement von der Anschlusszunge 14 entfernt ist, desto größer ist der Widerstand der Elektrode 12 zwischen Anschlusszunge 14 und dem Flächenelement. Der Ladungsträgerdurchtritt zwischen Elektrode 12 und Elektrolyten ist daher im Nahbereich der Anschlusszunge 14 am höchsten und nimmt von dort aus kontinuierlich ab. Dadurch kommt es zu einer ungleichmäßigen thermischen Belastung der Zelle 10, da die Wärmeentwicklung an den Elektroden 12 proportional zum Stromfluss in den Elektrolyten ist. Im Bereich der Anschlusszungen 14 entsteht also am meisten Wärme. Dadurch sinkt der Widerstand der Elektrode 12 im Nahbereich der Anschlusszungen 14 weiter ab, wodurch sich der Stromfluss und damit die Wärmeentwicklung weiter erhöhen, bis sich schließlich ein Gleichgewicht einstellt. Aufgrund der inhomogenen Temperaturverteilung in der Zelle 10 kommt es zu vorzeitigem Verschleiß der Zelle 10 und letztendlich zu ihrem Versagen.

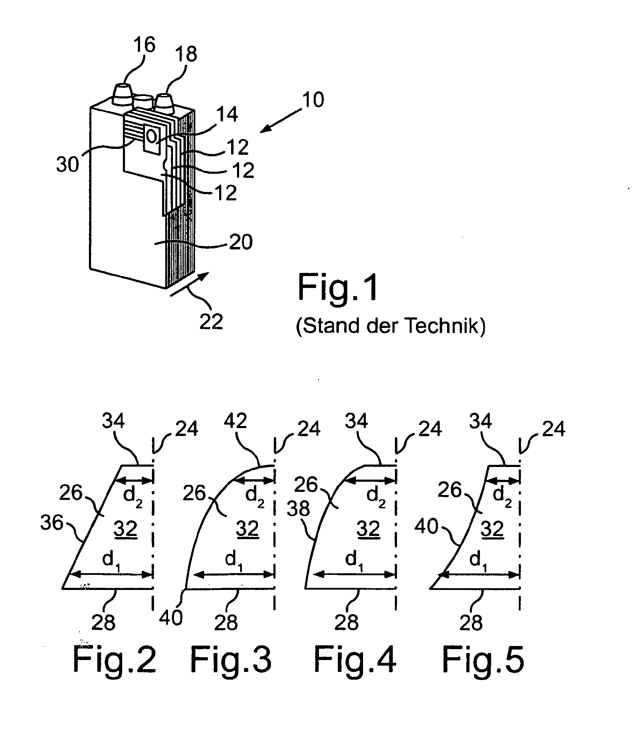

Um die Lebensdauer derartiger Zellen zu erhöhen, ist es also wünschenswert, den Stromfluss innerhalb der Zelle möglichst homogen zu gestalten. Dies ist mit den in den Figuren 2 bis 5 schematisch dargestellten Elektrodenformen möglich. Die Figuren 2 bis 5 zeigen hierbei Draufsichten auf die Elektroden in Stapelrichtung, die in der Fig. 1 durch den Pfeil 22 symbolisiert wird. Die Elektroden sind dabei in den Fig. 2 bis 5 nur zur Hälfte dargestellt und jeweils als spiegelsymmetrisch um die Achsen 24 zu verstehen. Eine erfindungsgemäße Zelle unterscheidet sich von der in Fig. 1 gezeigten Zelle lediglich durch die Formgebung der Elektroden und gegebenenfalls durch ein an die Elektrodenform angepasstes Gehäuse.

Die Homogenisierung der Stromdichte über die ganze Zelle hinweg wird in allen gezeigten Ausführungsbeispielen dadurch erreicht, dass sich die jeweilige Elektrode 26 von einer Basiskante 28 weg verjüngt. Die Basiskante 28 entspricht dabei der Kante 30 der Elektroden 12 aus Fig. 1, also derjenigen Kante, an der die Anschlusszunge 14 angeordnet ist.

Je näher ein Flächenelement der Elektrode 26 an der Basiskante 28 angeordnet ist, desto geringer ist sein Abstand zu einer in den Fig. 2 bis 5 nicht dargestellten Anschlusszunge. Um dem bereits oben erläuterten, durch den Innenwiderstand der Elektrode 26 bedingten Gradienten des Ladungsträgerdurchtritts von der Elektrode 26 in den Elektrolyten entgegenzuwirken, verjüngen sich die in den Fig. 2 bis 5 gezeigten Elektroden also von der Basiskante 28 weg. Mit anderen Worten ist in Bereichen mit hohem Ladungsträgerdurchtritt die Breite d1 der Elektroden 26 größer als die Breite d2 in Bereichen der Elektrode mit geringem Ladungsträgerdurchtritt in den Elektrolyten. Damit wird die Flächenstromdichte über die Oberfläche 32 der Elektrode 26 homogenisiert. Aufgrund der nun gleichmäßigen Flächenstromdichte ist auch die durch den Stromfluss und die Elektrodenreaktion bedingte Wärmeentwicklung über die gesamte Oberfläche 32 der Elektrode 26 im Wesentlichen konstant. Ein Verschleiß durch inhomogene thermische Belastungen wird also vermieden.

Die genaue Form der Elektrode 26 kann dabei weiter angepasst werden, um beispielsweise in Zusammenwirkung mit hier nicht dargestellten Kühlsystemen für eine noch bessere Homogenisierung der Temperaturverteilung in der Zelle zu sorgen, oder auch um die Form der Elektrode 26 und damit der gesamten, die Elektrode 26 verwendenden Zelle, an die Bauraumgegebenheiten ihres Einsatzortes anzupassen. Durch das Sichverjüngen der Elektroden 26 von ihrer Basiskante 28 weg eignen sich derart geformte Zellen besonders gut zum Einsatz in der Kraftfahrzeugtechnik, insbesondere für Plugin-Hybride, Range-Extender-Batteriefahrzeuge und auch reine Elektrofahrzeuge. Zu den genannten Vorteilen aufgrund der homogeneren Stromflussverteilung in der Zelle kommt hier noch ein Bauraumvorteil. Aufgrund der Formgebung der Elektroden eignen sich derartige Zellen nämlich besonders gut zur Montage in einem Mitteltunnel eines Kraftwagens. Damit können sie besonders bauraumsparend untergebracht werden.

Die in den Figuren 2, 4 und 5 gezeigten Elektroden 26 weisen jeweils eine der Basiskante 28 gegenüberliegende und zu dieser parallele weitere Kante 34 auf. Im einfachsten Fall sind die Kanten 28 und 34 durch eine weitere gerade Kante 36 verbunden, wie in Fig. 2 gezeigt, wodurch sich eine insgesamt trapezoide Form 26 ergibt. Alternativ können die zwischen Basiskante 28 und weiterer Kante 34 angeordneten Seitenkanten 38, 40 auch gekrümmt sein, wie in den Figuren 4 und 5 dargestellt. Es sind dabei sowohl konkave als auch konvexe Krümmungen möglich. Weiter alternativ wird auch vollständig auf eine zur Basiskante 28 parallel verlaufende weitere Kante verzichtet. Diese Ausführungsform ist in Fig. 3 gezeigt. Die Endpunkte 40 der Basiskante 28 sind hier über eine einzelne gekrümmte Kante 42 verbunden, welche bevorzugt der Kurve eines Kegelschnittes folgt. Für die gesamte Elektrode 26 ergibt sich damit die Form eines Kreis- oder Ellipsensegmentes, bzw. eines geschnittenen Paraboloids.

## Patentansprüche

1. Kraftwagen mit einer elektrochemischen Zelle (10), welche einen Elektrodenstapel aus wenigstens zwei Elektroden (26) in paralleler Anordnung aufweist, wobei die elektrochemische Zelle (10) außerhalb eines Motorraums des Kraftwagens in einem Aufnahmeraum des Kraftwagens angeordnet und **eine Querschnittfläche der elektrochemischen Zelle 10 an die Querschnittsflächen des Aufnahmeraums angepasst ist,**
**dadurch gekennzeichnet, dass**
der Aufnahmeraum eine sich in Richtung der Fahrzeughochachse verjüngende Querschnittsfläche aufweist, und eine Querschnittsfläche der Elektroden (26) mit zunehmendem Abstand von einem Anschluss, über welchen die jeweilige Elektrode (26) mit einem zugeordneten Abgriffspol (16,18) der Zelle (10) verbunden ist, abnimmt.

2. Kraftwagen nach Anspruch 1,
**dadurch gekennzeichnet, dass**
die Elektrode (26) sich von einer Basiskante (28) weg senkrecht zur Stapelrichtung (22) der Elektroden (26) verjüngt.

3. Kraftwagen nach Anspruch 1 oder 2,
**dadurch gekennzeichnet, dass**
die Elektrode (26) spiegelsymmetrisch bezüglich einer Mittelsenkrechten auf die Basiskante (28) ausgebildet ist.

4. Kraftwagen nach Anspruch 2 oder 3,
**dadurch gekennzeichnet, dass**
die Elektrode (26) eine weitere, zur Basiskante (28) parallele Kante (34) aufweist.

5. Kraftwagen nach Anspruch 4,
**dadurch gekennzeichnet, dass**
die Elektrode trapezoid ausgebildet ist.

6. Kraftwagen nach Anspruch 4,
**dadurch gekennzeichnet, dass**
Seitenkanten der Elektrode (26), welche die Basiskante (28) und die weitere Kante (34) verbinden, gekrümmt sind.

7. Kraftwagen nach Anspruch 2 oder 3,
**dadurch gekennzeichnet, dass**
die Endpunkte (40) der Basiskante (28) über eine gekrümmte Kante (42) verbunden sind, deren Verlauf einem Kegelschnitt folgt.

8. Kraftwagen nach einem der Ansprüche 2 bis 7,
**dadurch gekennzeichnet, dass**
jede Elektrode auf Seite der Basiskante (28) eine Anschlusszunge (14) zum Verbinden der Elektrode (26) mit dem zugeordneten Abgriffspol (16,18) der elektrochemischen Zelle (10) aufweist.

9. Kraftwagen nach einem der Ansprüche 1 bis 8,
**dadurch gekennzeichnet, dass**
die Elektroden (26) deckungsgleich im Elektrodenstapel angeordnet sind.

## Claims

1. Motor vehicle having an electrochemical cell (10) which comprises an electrode stack made up of at least two electrodes (26) arranged in parallel, the electrochemical cell (10) being arranged outside an engine compartment of the motor vehicle in an accommodation compartment of the motor vehicle and a cross-sectional area of the electrochemical cell (10) being matched to the cross-sectional areas of the accommodation compartment, **characterised in that** the accommodation compartment has a cross-sectional area which tapers in the direction of the vertical axis of the vehicle, and a cross-sectional area of the electrodes (26) decreases with increasing distance from a connection via which each electrode (26) is connected to an associated tap pole (16, 18) of the cell (10).

2. Motor vehicle according to claim 1, **characterised in that** the electrode (26) tapers away from a base edge (28), at a right angle to the stacking direction (22) of the electrodes (26).

3. Motor vehicle according to either claim 1 or claim 2, **characterised in that** the electrode (26) has mirror-image symmetry with respect to a perpendicular bisector of the base edge (28).

4. Motor vehicle according to either claim 2 or claim 3, **characterised in that** the electrode (26) has a further edge (34) parallel to the base edge (28).

5. Motor vehicle according to claim 4, **characterised in that** the electrode is trapezoidal.

6. Motor vehicle according to claim 4, **characterised in that** side edges of the electrode (26) which connect the base edge (28) and the further edge (34) are curved.

7. Motor vehicle according to either claim 2 or claim 3, **characterised in that** the end points (40) of the base edge (28) are connected via a curved edge (42), the profile of which follows a conical section.

8. Motor vehicle according to any of claims 2 to 7, **characterised in that** each electrode has, on the side of the base edge (28), a connecting tongue (14) for connecting the electrode (26) to the associated tap pole (16, 18) of the electrochemical cell (10).

9. Motor vehicle according to any of claims 1 to 8, **characterised in that** the electrodes (26) are arranged such that they are congruent in the electrode stack.

## Revendications

1. Véhicule automobile doté d'une cellule électrochimique (10) qui présente une pile d'électrodes composée d'au moins deux électrodes (26) dans un agencement parallèle, la cellule électrochimique (10) étant disposée à l'extérieur d'un compartiment de moteur du véhicule automobile dans un compartiment de réception du véhicule automobile, et une surface de section transversale de la cellule électrochimique (10) étant adaptée aux surfaces de section transversales du compartiment de réception,
**caractérisé en ce que**
le compartiment de réception présente une surface de section transversale qui se rétrécit dans la direction de l'axe vertical du véhicule, et **en ce qu'**une surface de section transversale des électrodes (26) diminue avec l'augmentation de l'éloignement d'une connexion par le biais de laquelle l'électrode (26) respective est connectée à un pôle de branchement (16, 18) de la cellule (10).

2. Véhicule automobile selon la revendication 1,
**caractérisé en ce que**
l'électrode (26) se rétrécit en s'éloignant d'une arête de base (28) perpendiculairement à la direction d'empilement (22) des électrodes (26).

3. Véhicule automobile selon la revendication 1 ou 2,
**caractérisé en ce que**
l'électrode (26) est constituée avec une symétrie miroir par rapport à une perpendiculaire centrale à l'arête de base (28).

4. Véhicule automobile selon la revendication 2 ou 3,
**caractérisé en ce que**
l'électrode (26) présente une autre arête (34) parallèle à l'arête de base (28).

5. Véhicule automobile selon la revendication 4,
**caractérisé en ce que**
l'électrode est constituée de façon trapézoïdale.

6. Véhicule automobile selon la revendication 4,
**caractérisé en ce que**
des arêtes latérales de l'électrode (26) qui raccordent l'arête de base (28) et l'autre arête (34) sont courbées.

7. Véhicule automobile selon la revendication 2 ou 3,
**caractérisé en ce que**
les points extrêmes (40) de l'arête de base (28) sont raccordés par le biais d'une arête courbe (42) dont le tracé suit une section conique.

8. Véhicule automobile selon une des revendications 2 à 7,
**caractérisé en ce que**
chaque électrode présente, sur le côté de l'arête de base (28), une languette de connexion (14) pour la connexion de l'électrode (26) au pôle de branchement (16, 18) affecté de la cellule électrochimique (10).

9. Véhicule automobile selon une des revendications 1 à 8,
**caractérisé en ce que**
les électrodes (26) sont disposées de façon congruente dans la pile d'électrodes.
